(19) Europäisches Patentamt
European Patent Office
Office européen des brevets

(11) **EP 3 228 962 A1**

(12) **EUROPEAN PATENT APPLICATION**

(43) Date of publication:
**11.10.2017 Bulletin 2017/41**

(51) Int Cl.:
*F25D 3/12* *(2006.01)*

(21) Application number: **16184131.7**

(22) Date of filing: **14.08.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **04.04.2016 US 201662317681 P**
**18.07.2016 US 201662363367 P**

(71) Applicant: **Linde Aktiengesellschaft**
**80331 München (DE)**

(72) Inventor: **NEWMAN, Michael D.**
**Hillsborough, NJ New Jersey 08844 (US)**

(74) Representative: **Hofmann, Andreas et al**
**RGTH**
**Patentanwälte PartGmbB**
**Postfach 33 02 11**
**80062 München (DE)**

(54) **METHOD FOR CALCULATING DRY ICE BLOCK AND RELATED APPARATUS**

(57) In order to overcome the limitations and problems that earlier methods and apparatus have experienced, a method for calculating a dry ice block (12) necessary to preserve a product (56) during transport comprises:
- calculating a surface area to weight ratio needed for the dry ice block (12) to preserve the product (56) in at least one of a chilled condition and a frozen condition; and
- forming the dry ice block (12) into a shape having said surface area to weight ratio.
A related apparatus (10) is also provided.

FIG.4

**Description**

**Technical field of the present invention**

The present invention relates to providing cryogenic chilling for products to be transported, and in particular for food products that require chilling and/or freezing during the transportation to an end user.

**Technological background of the present invention**

The grocery delivery business, such as for example for home delivery, has many challenges. One of the greatest challenges is being able to control temperature of the products during the transportation process.

This is especially critical when food products are being transported for home delivery to consumers of the food products.

It has been known to use carbon dioxide ($CO_2$) snow, dry ice pellets, or blocks of ice positioned with groceries in the tote during the transportation process. Frequently, the distributor will simply place the snow, pellets or ice blocks with the product or inside the transport tote to surround the product.

This arrangement of the chilling substance in known methods presents many challenges. Such challenges include the direct contact of the dry ice with the food product which can damage same sufficient enough to make it inedible.

There is also no control over the internal temperature of the transport tote and therefore, the known methods can only be reused with frozen products because the sensitivity of known methods does not sufficiently enable chilled products to be transported.

There is additionally no control over sublimation rates of the snow, pellets and ice blocks and therefore, the refrigeration cannot be controlled which is especially detrimental if the food product must be transported to an extreme remote location and environmental conditions will vary during the journey.

In effect, known ice blocks are not constructed, formed or tailored for the particular transport application. Finally, there is a safety risk to consumers who may accidently touch residue dry ice and be subjected to harmful ice burn.

**Disclosure of the present invention: object, solution, advantages**

Starting from the disadvantages and shortcomings as described above as well as taking the prior art as discussed into account, an object of the present invention is to overcome the limitations and problems that earlier methods and apparatus have experienced.

This object is accomplished by a method comprising the features of claim 1 as well as by an apparatus comprising the features of claim 7. Advantageous embodiments, expedient improvements and other optional features of the present invention are set forth herein and disclosed in the respective dependent claims.

The present invention basically provides for a method for calculating a dry ice block necessary to preserve a product during transport, which includes calculating a surface area to weight ratio needed for the dry ice block to preserve the product in at least one of a chilled condition and a frozen condition; and forming the dry ice block into a shape having said surface area to weight ratio.

A first stage of a method embodiment of the present invention includes formation of dry ice blocks.

For stage one, the rate of sublimation of dry ice ($CO_2$) is proportional to a surface area of that dry ice. With known transit conditions and requirements for product holding temperatures during delivery, the dry ice blocks can be formed with physical characteristics to match refrigeration requirements and sublimation rates.

Therefore, the dry ice block surface area to weight ratio or surface area to mass ratio is adjusted to match required sublimation rates which contribute directly to a refrigeration requirement. That is, if only a chilled environment is required, a dry ice block with a lower surface area to weight ratio will be formed; while a higher surface area to weight ratio will be used for the dry ice block for a frozen product.

A mass of the dry ice block is adjusted based upon time required in chilled or frozen state, as well as external conditions, product properties and tote insulation. With an extruding machine as discussed below, blocks can be automatically mass produced and surface area to weight customized for requirements of each tote and the products being transported.

A second stage of the method embodiment includes placement and storage of dry ice blocks in a specialized refrigeration container which is positioned in a grocery delivery container or tote.

For the second stage, the purpose of the container is to contain the formed dry ice block and prevent movement of or immobilize same by pressure fit, for example, in the container during transport. This fit will substantially reduce if not eliminate breakage or fracturing of the block. If the ice block is broken, such will effect the block's surface area and related sublimation. Additionally, storage of the dry ice block in the container will conceal the block and prevent contact with same by the end use consumer.

The container may be further constructed with one side thereof having a higher R-factor insulating material. A higher R-factor material can be used to supplement control of sublimation of the dry ice block. For example, if a further reduction in sublimation is required of the block, a high R-factor material could be used to insulate one side of the container such that when the container is placed in a tote, less heat is removed from the product area of the tote.

The container can be made with a thin plastic bottom and an aerogel insulated top, for example. This configuration will reduce the overall size of the container and therefore allow more room in the tote for food products or groceries.

The tote can also be constructed of insulated panels with a high R-factor. Plastic VIP (vacuum insulated panels) or aerogel filled panels can be used to minimize ingress of heat to an interior of the container from the environment external to the tote.

The method may also include positioning the dry ice block having the shape with the product for transport.

The method may further include restraining movement of the dry ice block during the transport.

The present invention also basically provides for an apparatus for transporting a product, in particular a consumable, for example a food product or grocery, in at least one of a chilled condition and a frozen condition, which includes a dry ice block with a surface area to weight ratio for providing at least one of said chilled and frozen conditions for the product; at least one container having a respective chamber therein sized and shaped to receive the dry ice block; and a tote having an internal space therein sized and shaped to receive the product and the at least one container.

The apparatus may also include the container having sidewalls constructed and arranged to immobolize the dry ice block in the chamber during transport.

According to an advantageous embodiment of the present invention, the at least one container may include sidewalls constructed and arranged to immobilize the dry ice block in the chamber.

In an expedient embodiment of the present invention, the at least one container may be an insulated container and/or a non-insulated container.

According to a favoured embodiment of the present invention, the insulated container may comprise a top, in particular of aerogel, and a bottom, in particular of plastic material, with the dry ice block being sandwiched between the top and the bottom.

the non-insulated container comprises a top, in particular of plastic material or cardboard material, and a bottom, in particular of plastic material or cardboard material, with the dry ice block being sandwiched between the top and the bottom.

According to an advantageous embodiment of the present invention, an extruder may be provided with a cylinder having a chamber therein and in which a piston may be movable.

In an expedient embodiment of the present invention, wherein carbon dioxide ($CO_2$) snow may be introduced into the chamber through a pipe or inlet in communication with the chamber.

According to a favoured embodiment of the present invention, a die may be provided having a particular cross-section shape to impart a shape to the dry ice block, said die being mounted to one end of the chamber and through which compressed carbon dioxide ($CO_2$) snow is forced by the piston to provide the dry ice block.

In a preferred embodiment of the present invention,

- a region of the extruder may be provided with a slot in which dies of different cross-section shapes can be removably mounted at the chamber upstream of an outlet of the chamber, and
- a cutting member, in particular a blade, may be disposed external to the extruder and downstream of the outlet to cut or slice-off individual dry ice blocks, which are then transported away on a conveyor.

The present embodiments may provide other elements and features as below.

The present invention may be used for the refrigeration for grocery delivery totes.

**Brief description of the drawings**

For a more complete understanding of the present embodiment disclosures and as already discussed above, there are several options to embody as well as to improve the teaching of the present invention in an advantageous manner. To this aim, reference may be made to the claims dependent on claim 1 as well as on claim 7; further improvements, features and advantages of the present invention are explained below in more detail with reference to particular and preferred embodiments by way of nonlimiting example and to the appended drawing figures taken in conjunction with the following description of exemplary embodiments, of which:

FIG. 1 shows a side view of an apparatus for providing blocks of dry ice, which ice blocks result from a method of the present embodiments;

FIG. 2A to FIG. 2C show cross-section views of dry ice or $CO_2$ blocks from the apparatus of FIG. 1;

FIG.3A to FIG.3C show side cross-section, top perspective and side cross-section views, respectively, of containers for use with the $CO_2$ ice blocks and a delivery tote;

FIG. 4 shows a side view in cross-section of the container being mounted within a delivery tote in which food product is also transported; and

FIG. 5 shows a top perspective view of a dry ice block which can be used in the container of the apparatus.

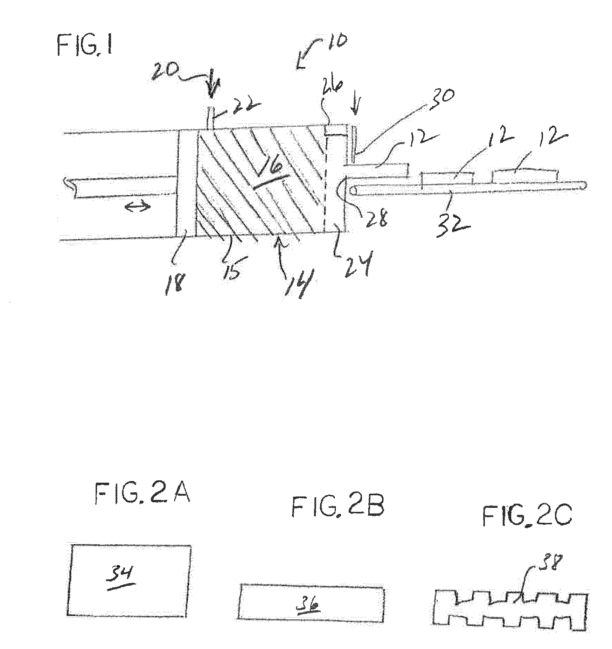

In the appended drawing figures, like equipment is labelled with the same reference numerals throughout the description of FIG. 1 to FIG. 5.

**Detailed description of the drawings; best way of embodying the present invention**

Before explaining the inventive embodiments in detail, it is to be understood that the present invention is not limited in its application to the details of construction and arrangement of parts illustrated in the accompanying drawings, since the present invention is capable of other embodiments and being practiced or carried out in various ways. Also, it is to be understood that the phraseology or terminology employed herein is for the purpose of description and not of limitation.

In the description above and below, terms such as horizontal, upright, vertical, above, below, beneath and the like, are used solely for the purpose of clarity illustrating the present invention and should not be taken as words of limitation. The drawings are for the purpose of illustrating the present invention and are not intended to be to scale.

FIG. 1 to FIG. 5 show with more particularity the elements and embodiments of refrigeration, and including method embodiments of refrigeration for grocery delivery totes.

Referring to FIG. 1, an apparatus is shown generally at 10 for forming the dry ice block or $CO_2$ block 12 or a plurality of the blocks 12 used in the present embodiments. The apparatus 10 includes an extruder apparatus 14 with a cylinder 15 having a chamber 16 therein and in which a piston 18 is movable. $CO_2$ snow 20 is introduced into the chamber 16 through a pipe 22 or inlet in communication with the chamber 16.

A die 24 having a particular cross-section shape (to impart a shape to the dry ice block 12) is mounted to one end of the chamber 16 and through which compressed $CO_2$ snow is forced by the piston 18 to provide the dry ice block 12. A region of the extruder 14 is provided with a slot 26 in which dies of different cross-section shapes can be removably mounted at the chamber 16 upstream of an outlet 28 of the chamber 16.

With this manner of construction of the apparatus 10, different dies may be selectively used so that dry ice blocks 12 of different shapes are extruded from the apparatus through the outlet 28. A cutting member 30 such as a blade for example is disposed external to the extruder 14 and downstream of the outlet 28 to cut or slice-off individual dry ice blocks 12 from the extruded block, which are then transported away on a conveyor 32.

As shown in FIG. 2A to FIG. 2C, the die 24 selected can have a particular cross-section shape to result in a particular dry ice block 12 having its own specific surface area to mass ratio.

For example, a cross-section shape 34 of the dry ice block 12 is shown in FIG. 2A would possess a low ratio i.e., its surface area to mass ratio would provide for low sublimation which would translate into a low rate of refrigeration.

The dry ice block 12 having a cross-section shape 36 as shown in FIG. 2B would have, relatively speaking, a medium ratio, i.e. a medium sublimation which translates into a medium rate of refrigeration.

The block having the shape 38 in FIG. 2C would have a high ratio of the surface area to mass ratio, which would provide a high sublimation rate and therefore translate into higher refrigeration or higher heat flux of products to be chilled or frozen.

After the dry ice block 12 is selected and produced for the particular transport operation, such dry ice block 12 is deposited in a container 40 to be retained therein during the transport of the perishable items, such as for example food products or groceries.

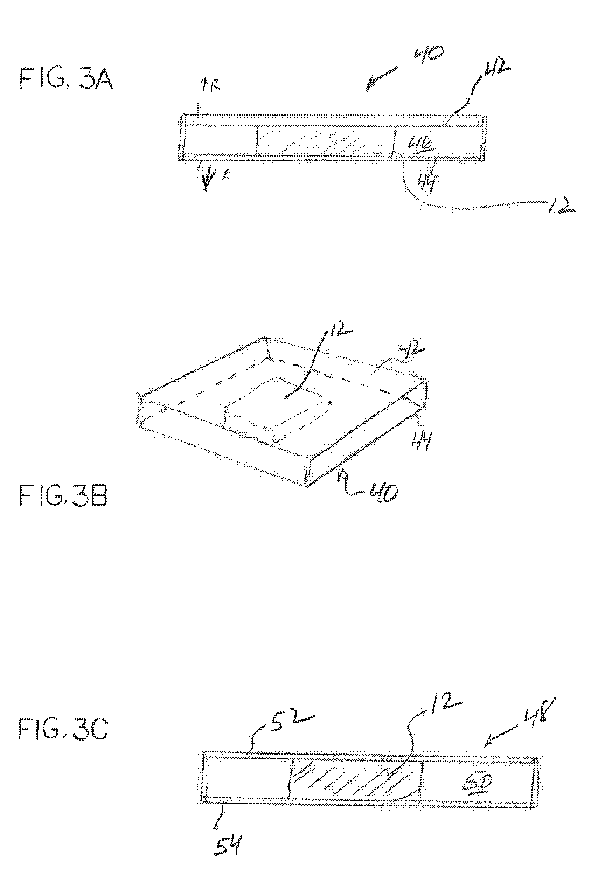

Referring to FIG. 3A and FIG. 3B, an insulated container 40 is shown with a dry ice block or $CO_2$ block 12 disposed therein. The container 40 can include an openable top 42 which can consist of aerogel for providing a particular R-factor (heat flux factor R). A bottom 44 can be constructed for example from plastic which provides a different R-factor (heat flux factor R).

The dry ice block or $CO_2$ block 12 is disposed within a chamber 46 within the container 40. The chamber 46 is sized and shaped to receive the dry ice block 12 therein. To prevent the ice block 12 from being moved around in the chamber 46 and to avoid breakage of the ice block 12, the chamber 46 will have a height sufficient to accommodate the ice block when the top 42 is closed such that the ice block 12 is sandwiched between the top 42 and bottom 44 to prevent the ice block 12 from being disrupted in the chamber 46. The dry ice block 12 is effectively immobilized in the chamber 46.

In FIG. 3C, a non-insulated container 48 is shown in which the dry ice block 12 is disposed. In the non-insulated container 48, there is a chamber 50 therein to receive the dry ice block 12. The chamber 50 receives the dry ice block 12 so that same does not move around and become broken during transport.

As with the container 40 of FIG. 3A and of FIG. 3B, breakage of the dry ice block 12 would compromise the surface area to mass ratio and therefore, adversely impact the sublimation qualities of the dry ice block 12 resulting in failure to adequately chill or freeze the products being transported.

In the embodiment of FIG. 3C, an openable top 52 and a bottom 54, including other sidewalls of the container 48, can be manufactured from plastic material or cardboard to facilitate recycling and biodegradable qualities of the container 48. The embodiment of FIG. 3C may be best suited for transport of products, such as for example grocery products that must remain in a frozen state until receipt by the end-user.

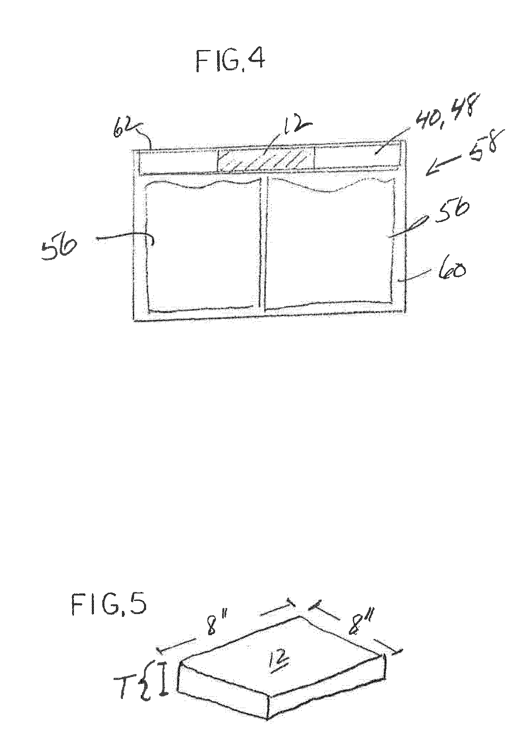

FIG. 4 shows food products 56 or a plurality of grocery bags disposed in a tote 58 to transport the food products 56 to a remote location, such as for example to an end use customer. The tote 58 includes an interior space 60 in which the food products 56 are received, said interior space 60 being sized and shaped to also receive either one of or both of the containers 40, 48 for chilling and/or freezing of the food products 56, depending upon the delivery operations.

The container 40, 48 with the dry ice block 12 disposed therein is seated or nested on top of the food products 56 and a top 62 or cover of the tote 58 closed and sealed so that the tote 58 can be transported to the end user.

Referring to FIG. 5, the dry ice block 12 is shown which corresponds for example to the low ratio ice block embodiment 34 of FIG. 2A. The dimensions of the dry ice block 12 are by way of example only, and such dimensions [L(ength): 20,32 cm; W(idth): 20,32 cm] may of course be varied depending upon the product 56 being chilled or frozen, and other conditions during the transport of the product 56 to the end user. A thickness [T] will vary depending upon the surface area to mass ratio of the ice block 12 being used.

Referring to the appended drawing figures, it is possible to estimate dry ice usage versus ice block surface area. Accordingly, for given dimensions of a dry ice block 12, i. e. its surface area and weight, a relationship between a surface area to weight ratio versus refrigeration per unit mass can be obtained. For given dimensions of a dry ice block 12, i. e. its surface area and weight, a corresponding refrigeration per unit mass of the ice block 12 can be calculated.

Refrigeration per unit mass is compared to the refrigeration requirements of the tote 58 so that a geometry and weight of the ice block 12 can be selected and produced having the proper geometric dimensions and weight conducive to the products 56 being shipped.

The calculations, formulas, example and table which follow illustrate a relationship between a surface area to weight ratio versus refrigeration per unit mass:

Variables: 

| | | |
|---|---|---|
| air temperature $T_{air}$ | [°F] or [°C] |
| dry ice temperature $T_{dryice}$ | [°F] or [°C] |
| block thickness L | [ft] |
| block area A | [ft$^2$] |

Results from thermo/heat transfer properties table:

| | | |
|---|---|---|
| kinematic viscosity v | (air) | = 8.76 x 10$^5$ ft$^2$/s |
| thermal conductivity k | (air) | = 0.01086 BTU/(hr x ft x °F) |
| Prandtl number Pr | (air) | = 0.736 |
| coefficient b of thermal expansion (1/T) | (air) | = 0.004796 |

Grashof number Gr $= 9.81 \times b \times ABS(T_{dryice} - T_{air})) \times L^3 / v2$

Nusselt number $N_u$ $= (0.825 + 0.387 \times (Pr \times G_r)^{0.166} / (1 + (0.492/Pr)^{0.5625})^{0.296})2$

convective heat transfer h $= 4/3 \times Nu \times k / L \ [W/(m^Z x K)]$

refrigeration g $= h \times A \times (T_{air} - T_{dryice}) \ [W]$ or [BTU/hr]

Example: $T_{air}$ = -20 F = -28.9°C (frozen)

$T_{dryice}$ = -109°F = -78.3°C

dry ice = 100 lb/ft$^3$

dry ice block = FIG. 5

| block thickn. [inches]: | weight [lb]: | surf. area [in$^2$]: | refrigeration [BTU/hr]: | refrigeration per unit mass [BTU/(hr x lb)]: | surf. area per weight [in$^2$/lb]: |
|---|---|---|---|---|---|
| 1 | 3.7 | 160 | 227 | 61.4 | 43.2 |
| 2 | 7.4 | 192 | 238 | 32.2 | 25.9 |

(continued)

| block thickn. [inches]: | weight [lb]: | surf. area [in$^2$]: | refrigeration [BTU/hr]: | refrigeration per unit mass [BTU/(hr x lb)]: | surf. area per weight [in$^2$/lb]: |
|---|---|---|---|---|---|
| 3 | 11.1 | 224 | 260 | 23.4 | 20.2 |
| 4 | 14.8 | 256 | 386 | 19.3 | 17.3 |
| 5 | 18.5 | 288 | 320 | 17.3 | 15.6 |

The fourth column provides the refrigeration of corresponding dry ice blocks having the characteristics set forth in the first three columns. Referring to the last two columns, the refrigeration per unit mass decreases with decreasing surface area to weight ratio.

The process above will allow for safe, controlled and long duration transport of chilled or frozen groceries with the use of specially formed dry ice blocks within a well-insulated tote.

The present embodiments provide for controlling refrigeration of the products, such as food products, being transported from a distribution site to a remote location for and end use customer. The embodiments also provide for a longer duration of acceptable chilling and/or refrigeration of the products and an efficient use of the dry ice being used during shipment of the products. Finally, end use customers are protected from contact with the dry ice used, chilled and/or maintained as frozen for the products be transported.

It will be understood that the embodiments described herein are merely exemplary, and that a person skilled in the art may make variations and modifications without departing from the spirit and scope of the present invention. All such variations and modifications are intended to be included within the scope of the present invention as described above and defined the appended claims. Further, it should be understood that all embodiments disclosed are not necessarily in the alternative, as various embodiments of the present invention may be combined to provide the desired result.

## List or reference numerals

| 10 | apparatus |
|---|---|
| 12 | dry ice block, in particular carbon dioxide ($CO_2$) snow block |
| 14 | extruder |
| 15 | cylinder |
| 16 | chamber |
| 18 | piston |
| 20 | dry ice snow |
| 22 | pipe or inlet of chamber 16 |
| 24 | die |
| 26 | slot |
| 28 | outlet of chamber 16 |
| 30 | cutting member, in particular blade |
| 32 | conveyor |
| 34 | first, in particular low ratio, cross-section shape of dry ice block 12 |
| 36 | second, in particular medium ratio, cross-section shape of dry ice block 12 |
| 38 | third, in particular high ratio, cross-section shape of dry ice block 12 |
| 40 | container, in particular insulated container |
| 42 | top, in particular openable top, of container 40 |
| 44 | bottom of container 40 |
| 46 | chamber within container 40 |
| 48 | container, in particular non-insulated container |
| 50 | chamber within container 48 |
| 52 | top, in particular openable top, of container 48 |
| 54 | bottom of container 48 |
| 56 | product, in particular consumable, for example food product or grocery |
| 58 | tote |
| 60 | interior space or internal space of tote 58 |
| 62 | top or cover of tote 58 |
| R | heat flux factor |

**Claims**

1.  A method for calculating a dry ice block (12) necessary to preserve a product (56) during transport, comprising:

    - calculating a surface area to weight ratio needed for the dry ice block (12) to preserve the product (56) in at least one of a chilled condition and a frozen condition; and
    - forming the dry ice block (12) into a shape having said surface area to weight ratio.

2.  The method according to claim 1, further comprising positioning the dry ice block (12) having the shape with the product (56) for transport.

3.  The method according to claim 1 or 2, wherein the product (56) is a consumable selected from the group consisting of a food product, and groceries.

4.  The method according to at least one of claims 1 to 3, wherein the calculating comprises:

$$\text{Grashof number Gr} \quad = 9.81 \times b \times ABS(T_{dryice} - T_{air})) \times L^3 / v^2;$$

$$\text{Nusselt number } N_u \quad = (0.825 + 0.387 \times (Pr \times Gr)^{0.166} / (1 + (0.492/Pr)^{0.5625})^{0.296})^2;$$

$$\text{convective heat transfer h} = 4/3 \times Nu \times k / L \quad [W/(m^2 \times °K];$$

    and

$$\text{refrigeration g} \quad = h \times A \times (T_{air} - T_{dryice}) \quad [W] \text{ or } [BTU/hr],$$

    wherein kinematic viscosity v (air) = 8.76 x $10^5$ $ft^2$/s;
    thermal conductivity k (air) = 0.01086 BTU/(hr x ft x °F);
    Prandtl number Pr (air) = 0.736;
    coefficient b of thermal expansion (1/T) (air) = 0.004796.

5.  The method according to at least one of claims 1 to 4, wherein the dry ice block (12) comprises carbon dioxide ($CO_2$) snow.

6.  The method according to at least one of claims 1 to 5, further comprising restraining movement of the dry ice block (12) during the transport.

7.  An apparatus (10) for transporting a product (56), in particular a consumable, for example a food product or grocery, in at least one of a chilled condition and a frozen condition, comprising:

    - a dry ice block (12) with a surface area to weight ratio for providing at least one of said chilled and frozen conditions for the product (56);
    - at least one container (40; 48) having a respective chamber (46; 50) therein sized and shaped to receive the dry ice block (12); and
    - a tote (58) having an internal space (60) therein sized and shaped to receive the product (56) and the at least one container (40; 48).

8.  The apparatus according to claim 7, wherein the at least one container (40; 48) includes sidewalls constructed and arranged to immobilize the dry ice block (12) in the chamber (46; 50).

9.  The apparatus according to claim 7 or 8, wherein the at least one container (40; 48) is an insulated container (40) and/or a non-insulated container (48).

**10.** The apparatus according to claim 9, wherein the insulated container (40) comprises a top (42), in particular of aerogel, and a bottom (44), in particular of plastic material, with the dry ice block (12) being sandwiched between the top (42) and the bottom (44).

**11.** The apparatus according to claim 9, wherein the non-insulated container (48) comprises a top (52), in particular of plastic material or cardboard material, and a bottom (54), in particular of plastic material or cardboard material, with the dry ice block (12) being sandwiched between the top (52) and the bottom (54).

**12.** The apparatus according to at least one of claims 7 to 11, further comprising an extruder (14) with a cylinder (15) having a chamber (16) therein and in which a piston (18) is movable.

**13.** The apparatus according to claim 12, wherein carbon dioxide ($CO_2$) snow (20) is introduced into the chamber (16) through a pipe or inlet (22) in communication with the chamber (16).

**14.** The apparatus according to claim 13, further comprising a die (24) having a particular cross-section shape to impart a shape to the dry ice block (12), said die (24) being mounted to one end of the chamber (16) and through which compressed carbon dioxide ($CO_2$) snow (20) is forced by the piston (18) to provide the dry ice block (12).

**15.** The apparatus according to claim 14,

- wherein a region of the extruder (14) is provided with a slot (26) in which dies (24) of different cross-section shapes can be removably mounted at the chamber (16) upstream of an outlet (28) of the chamber (16), and
- wherein a cutting member (30), in particular a blade, is disposed external to the extruder (14) and downstream of the outlet (28) to cut or slice-off individual dry ice blocks (12), which are then transported away on a conveyor (32).

FIG.1

FIG.2A

FIG.2B

FIG.2C

FIG. 3A

FIG. 3B

FIG. 3C

FIG. 4

62    12    40, 48

58

56    56

56    60

FIG. 5

8"    8"

T{I    12

Europäisches
Patentamt

European
Patent Office

Office européen
des brevets

# EUROPEAN SEARCH REPORT

**Application Number**

EP 16 18 4131

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Murphy, Michael J. , McSweeney, Thomas I.: "Technical assessment of Dry Ice Limits on Aircraft", , 31 December 2013 (2013-12-31), XP008183174, DOI: 10.17226/22651 ISBN: 978-0-309-25883-8 Retrieved from the Internet: URL:https://www.nap.edu/read/22651/chapter /1 [retrieved on 2017-02-07] | 1-3,5,6 | INV. F25D3/12 |
| A | * the whole document * | 4 | |
| X | US 5 426 948 A (HYDE JR CHARLES M [US]) 27 June 1995 (1995-06-27) * column 3, line 45 - column 4, line 3 * | 1 | |
| X | CA 2 071 792 A1 (AFRICAN OXYGEN LTD [ZA]) 29 December 1992 (1992-12-29) | 1-3,5-8 | |
| A | * the whole document * | 4 | TECHNICAL FIELDS SEARCHED (IPC) |
| X | US 6 212 901 B1 (PINT KENNETH R [US] ET AL) 10 April 2001 (2001-04-10) * the whole document * | 7-11 | F25D C01B |
| X | EP 2 604 956 A1 (ACP BELGIUM N V [BE]) 19 June 2013 (2013-06-19) | 7-11 | |
| A | * the whole document * | 1-6, 12-15 | |
| X | JP 2003 035477 A (HITACHI LTD) 7 February 2003 (2003-02-07) * abstract; figures 1-11 * | 1,7 | |

The present search report has been drawn up for all claims

| Place of search | Date of completion of the search | Examiner |
|---|---|---|
| The Hague | 8 February 2017 | de Graaf, Jan Douwe |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

......................................................................................

& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 16 18 4131

This annex lists the patent family members relating to the patent documents cited in the above-mentioned European search report.
The members are as contained in the European Patent Office EDP file on
The European Patent Office is in no way liable for these particulars which are merely given for the purpose of information.

08-02-2017

| Patent document cited in search report | | Publication date | Patent family member(s) | | Publication date |
|---|---|---|---|---|---|
| US 5426948 | A | 27-06-1995 | NONE | | |
| CA 2071792 | A1 | 29-12-1992 | CA ZA | 2071792 A1 9203244 B | 29-12-1992 27-01-1993 |
| US 6212901 | B1 | 10-04-2001 | NONE | | |
| EP 2604956 | A1 | 19-06-2013 | EP FR | 2604956 A1 2984473 A1 | 19-06-2013 21-06-2013 |
| JP 2003035477 | A | 07-02-2003 | NONE | | |

EPO FORM P0459

For more details about this annex : see Official Journal of the European Patent Office, No. 12/82